(19) Europäisches Patentamt
European Patent Office
Office européen des brevets

(11) **EP 4 694 389 A1**

(12) **EUROPEAN PATENT APPLICATION**
published in accordance with Art. 153(4) EPC

(43) Date of publication:
**11.02.2026 Bulletin 2026/07**

(21) Application number: **24791843.6**

(22) Date of filing: **30.03.2024**

(51) International Patent Classification (IPC):
*H04W 52/18* (2009.01)

(52) Cooperative Patent Classification (CPC):
**H04B 1/7097; H04W 52/18; H04W 52/38**

(86) International application number:
**PCT/CN2024/085097**

(87) International publication number:
**WO 2024/217257 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.04.2023 CN 202310458331**

(71) Applicant: **Huawei Technologies Co., Ltd.
Shenzhen, Guangdong 518129 (CN)**

(72) Inventors:
• **GE, Yang**
**Shenzhen, Guangdong 518129 (CN)**
• **GENG, Haijian**
**Shenzhen, Guangdong 518129 (CN)**
• **GONG, Zhengwei**
**Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **WIRELESS RESOURCE MANAGEMENT METHOD, APPARATUS, STORAGE MEDIUM AND COMPUTER PROGRAM**

(57) This application discloses a radio resource management method and apparatus, a storage medium, and a computer program. Received power detection is performed, by using a first bandwidth unit, in a downlink frequency range corresponding to a receive end, to obtain a received power corresponding to each of at least one first bandwidth unit. A spatial isolation degree between a transmit end and the receive end is obtained based on a system transmit power at the receive end and the received power corresponding to each of the at least one first bandwidth unit. A transmit power corresponding to at least one resource unit is obtained based on the spatial isolation degree and a power suppression degree that corresponds to the at least one resource unit, such that a sum of powers received by the receive end on all resource units is less than or equal to a blocking threshold. Therefore, a power at the transmit end can be dynamically adjusted, thereby eliminating blocking interference at the receive end, and maximizing a gain of spectrum spreading.

FIG. 6

## Description

This application claims priority to Chinese Patent Application No. 202310458331.9, filed with the China National Intellectual Property Administration on April 18, 2023 and entitled "RADIO RESOURCE MANAGEMENT METHOD AND APPARATUS, STORAGE MEDIUM, AND COMPUTER PROGRAM", which is incorporated herein by reference in its entirety.

## TECHNICAL FIELD

This application relates to the field of communication technologies, and in particular, to a radio resource management method and apparatus, a storage medium, and a computer program.

## BACKGROUND

Currently, a spectrum range actually deployed by operators is generally narrower than a spectrum range defined in the 3rd Generation Partnership Project (3rd generation partnership project, 3GPP) protocols, partly due to limitations in filter performance. When a transmission spectrum and a reception spectrum are too close, transmitted signals interfere with received signals. For example, an operator A actually deploys a spectrum A while an operator B actually deploys a spectrum B, leaving a 5 MHz gap between them, where this gap spectrum is theoretically available for deployment (for example, through spectrum spreading by the operator A). However, if the operator A expects to use this spectrum, the operator A is faced with a problem of blocking a system of the operator B.

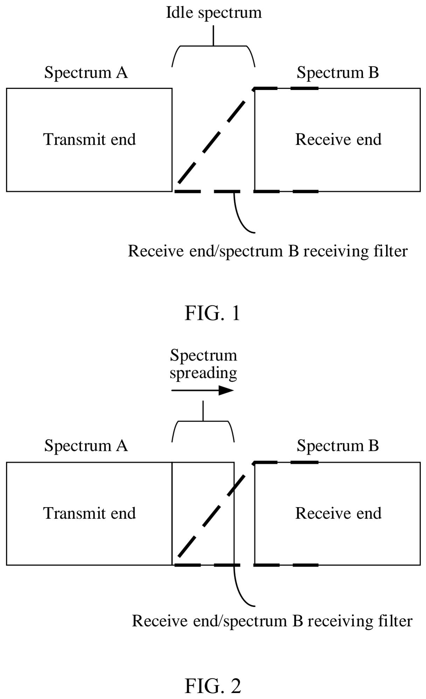

FIG. 1 is a diagram of performance of a receive end before spectrum spreading. Since no spectrum spreading is applied to a transmit end, the receive end has good receiving performance. FIG. 2 is a diagram of performance of the receive end after spectrum spreading. After the spectrum spreading is applied to the transmit end, because an existing uplink receiving filter at the receive end cannot meet an ideal requirement for energy suppression on a spread area, energy in the spread area is received by the receive end to a specific extent. If this part of energy is excessively large, uplink receiving sensitivity of an uplink receiver at the receive end is affected by blocking interference, and uplink performance of the receive end deteriorates.

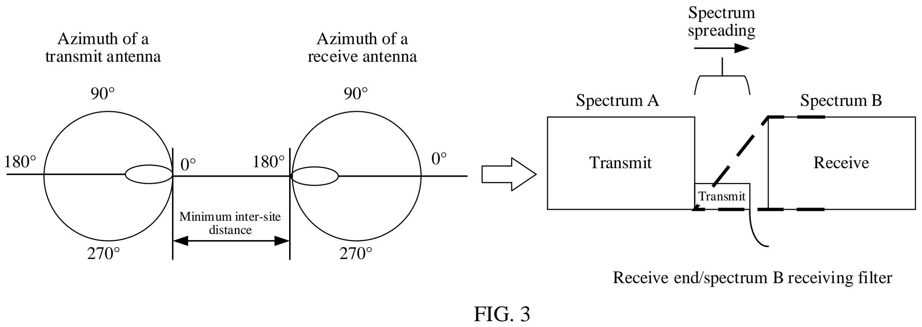

Currently, a power of a transmit end is reduced based on theoretical constraints, meaning that estimation is performed based on worst cases (FIG. 3 is a diagram of reducing a power of a transmit end based on theoretical constraints, where an azimuth of a transmit antenna is 0°, an azimuth of a receive antenna is 180°, making an azimuth difference between the transmit antenna and the receive antenna 180°, and a spatial isolation degree is evaluated based on an allowable minimum inter-site distance). Power suppression is performed on the spread area based on the spatial isolation degree, making a total power in the spread area received by the receive end is less than a corresponding blocking threshold. However, if the transmit end reduces power based on a strictest condition, a transmit power in the spread area greatly decreases, and a signal to interference plus noise ratio correspondingly decreases. Finally, an experience gain brought by the spread area also greatly declines, thereby diminishing the value of the spectrum spreading. Therefore, this solution overcorrects to some extent, and in many actual deployment scenarios, an actual spatial isolation degree is significantly greater than a theoretical lower limit. As a result, a power of the transmit end is excessively reduced, reducing a gain of the spectrum spreading.

## SUMMARY

This application provides a radio resource management method and apparatus, a storage medium, and a computer program, so that a power at a transmit end is dynamically adjusted, thereby eliminating blocking interference at a receive end, and maximizing a gain of spectrum spreading.

According to a first aspect, a method is provided. The method may be performed by a transmit-end device, may be performed by a module (for example, a processor, a chip, or a chip system) used in the transmit-end device, or may be implemented by a logical node, a logical module, or software that can implement all or a part of functions of the transmit-end device. For example, the transmit-end device may be an access network device.

The method includes: performing, by using a first bandwidth unit, received power detection in a downlink frequency range corresponding to a receive end, to obtain a received power corresponding to each of at least one first bandwidth unit, where the downlink frequency range includes the at least one first bandwidth unit; obtaining a spatial isolation degree between a transmit end and the receive end based on a system transmit power at the receive end and the received power corresponding to each of the at least one first bandwidth unit; and obtaining, based on the spatial isolation degree and a power suppression degree that corresponds to at least one resource unit, a transmit power corresponding to the at least one resource unit, such that a sum of powers received by the receive end on all resource units is less than or equal to a blocking threshold.

In this aspect, the spatial isolation degree between the transmit end and the receive end is obtained based on the received power detection, and transmit powers corresponding to a plurality of resource units are obtained based on the spatial isolation degree, such that the sum of the powers received by the receive end on all the resource units is less than or equal to the blocking threshold. Therefore, a power at the transmit end can be dynamically adjusted, thereby eliminating blocking interference at the receive end, and maximizing a gain of spectrum spreading.

In a possible implementation, a power received by the receive end on a resource unit is a difference between a transmit power corresponding to the resource unit, and the spatial isolation degree plus a power suppression degree corresponding to the resource unit.

In another possible implementation, the method further includes: determining an operating mode of the receive end, where the operating mode of the receive end includes any one of the following: a wideband signal mode and a narrowband signal mode; and the system transmit power at the receive end is associated with the operating mode of the receive end.

In this implementation, an obtained received power varies with different operating modes of the receive end. Therefore, the received power at the receive end can be accurately obtained by first determining the operating mode of the receive end.

In still another possible implementation, when the operating mode of the receive end is the narrowband signal mode, a difference between the received power corresponding to the first bandwidth unit and a received power corresponding to an adjacent bandwidth unit of the first bandwidth unit is greater than or equal to a first threshold; or when the operating mode of the receive end is the wideband signal mode, a difference between received powers corresponding to a plurality of consecutive first bandwidth units is less than or equal to a second threshold, and a difference between the received powers corresponding to the plurality of consecutive bandwidth units, and a received power corresponding to an adjacent bandwidth unit of the plurality of consecutive bandwidth units is greater than or equal to the first threshold.

In still another possible implementation, the first bandwidth unit is less than or equal to 400 kHz.

In this implementation, the downlink frequency range corresponding to the receive end is a wide bandwidth range. The received power detection is performed, by using the first bandwidth unit, in the downlink frequency range corresponding to the receive end, so that detection accuracy can be improved.

In still another possible implementation, the method further includes: sending a signal based on the transmit power corresponding to the at least one resource unit.

In this implementation, after the transmit power corresponding to the at least one resource unit is obtained, the signal may be sent based on the transmit power corresponding to the at least one resource unit; or no signal may be sent, and in this case, the transmit power corresponding to the at least one resource unit is 0.

According to a second aspect, a radio resource management apparatus is provided. The radio resource management apparatus may implement the method in the first aspect. The foregoing method may be implemented by software or hardware executing corresponding software.

The apparatus includes an energy detection module, an isolation degree calculation module, and a scheduling optimization module, where the energy detection module is configured to perform, by using a first bandwidth unit, received power detection in a downlink frequency range corresponding to a receive end, to obtain a received power corresponding to each of at least one first bandwidth unit, where the downlink frequency range includes the at least one first bandwidth unit; the isolation degree calculation module is configured to obtain a spatial isolation degree between a transmit end and the receive end based on a system transmit power at the receive end and the received power corresponding to each of the at least one first bandwidth unit; and the scheduling optimization module is configured to obtain, based on the spatial isolation degree and a power suppression degree that corresponds to at least one resource unit, a transmit power corresponding to the at least one resource unit, such that a sum of powers received by the receive end on all resource units is less than or equal to a blocking threshold.

In a possible implementation, a power received by the receive end on a resource unit is a difference between a transmit power corresponding to the resource unit, and the spatial isolation degree plus a power suppression degree corresponding to the resource unit.

In another possible implementation, the apparatus further includes: an operating mode determining module, configured to determine an operating mode of the receive end, where the operating mode of the receive end includes any one of the following: a wideband signal mode and a narrowband signal mode, and the system transmit power at the receive end is associated with the operating mode of the receive end.

In still another possible implementation, when the operating mode of the receive end is the narrowband signal mode, a difference between the received power corresponding to the first bandwidth unit and a received power corresponding to an adjacent bandwidth unit of the first bandwidth unit is greater than or equal to a first threshold; or when the operating mode of the receive end is the wideband signal mode, a difference between received powers corresponding to a plurality of consecutive first bandwidth units is less than or equal to a second threshold, and a difference between the received powers corresponding to the plurality of consecutive bandwidth units, and a received power corresponding to an adjacent bandwidth unit of the plurality of consecutive bandwidth units is greater than or equal to the first threshold.

In still another possible implementation, the first bandwidth unit is less than or equal to 400 kHz.

In still another possible implementation, the apparatus further includes: a sending module, configured to send a signal based on the transmit power corresponding to the at least one resource unit.

According to a third aspect, a radio resource management apparatus is provided. The radio resource management apparatus may implement the method in the first aspect. The foregoing method may be implemented by hardware or hardware executing corresponding software.

The apparatus includes an antenna unit, a remote radio unit, and a baseband unit connected in sequence, where the remote radio unit is configured to perform, by using a first bandwidth unit, received power detection in a downlink frequency range corresponding to a receive end, to obtain a received power corresponding to each of at least one first bandwidth unit, where the downlink frequency range includes the at least one first bandwidth unit; the baseband unit is configured to obtain a spatial isolation degree between a transmit end and the receive end based on a system transmit power at the receive end and the received power corresponding to each of the at least one first bandwidth unit; and the baseband unit is further configured to obtain, based on the spatial isolation degree and a power suppression degree that corresponds to at least one resource unit, a transmit power corresponding to the at least one resource unit, such that a sum of powers received by the receive end on all resource units is less than or equal to a blocking threshold.

In a possible implementation, a power received by the receive end on a resource unit is a difference between a transmit power corresponding to the resource unit, and the spatial isolation degree plus a power suppression degree corresponding to the resource unit.

In another possible implementation, the baseband unit is further configured to determine an operating mode of the receive end, where the operating mode of the receive end includes any one of the following: a wideband signal mode and a narrowband signal mode, and the system transmit power at the receive end is associated with the operating mode of the receive end.

In still another possible implementation, when the operating mode of the receive end is the narrowband signal mode, a difference between the received power corresponding to the first bandwidth unit and a received power corresponding to an adjacent bandwidth unit of the first bandwidth unit is greater than or equal to a first threshold; or when the operating mode of the receive end is the wideband signal mode, a difference between received powers corresponding to a plurality of consecutive first bandwidth units is less than or equal to a second threshold, and a difference between the received powers corresponding to the plurality of consecutive bandwidth units, and a received power corresponding to an adjacent bandwidth unit of the plurality of consecutive bandwidth units is greater than or equal to the first threshold.

In still another possible implementation, the first bandwidth unit is less than or equal to 400 kHz.

In still another possible implementation, the antenna unit is configured to send a signal based on the transmit power corresponding to the at least one resource unit.

For example, the radio resource apparatus in the second aspect and the third aspect may be an access network device, may be a module (for example, a processor, a chip, or a chip system) used in the access network device, or may be a logical node, a logical module, or software that can implement all or a part of functions of the access network device.

According to a fourth aspect, a computer-readable storage medium is provided, where the computer-readable storage medium stores a computer program or instructions; and when the program or the instructions are executed by a processor, the method according to any one of the first aspect or the implementations of the first aspect is performed.

According to a fifth aspect, a computer program is provided, where when the computer program is executed on a computer, the method according to any one of the first aspect or the implementations of the first aspect is performed.

According to a sixth aspect, a computer program product is provided. When the computer program product is executed on a computing device, the method according to any one of the first aspect or the implementations of the first aspect is performed.

According to a seventh aspect, a circuit is provided. The circuit is coupled to a memory. The circuit is configured to perform the method according to any one of the first aspect or the implementations of the first aspect. The circuit may include a chip circuit.

## BRIEF DESCRIPTION OF DRAWINGS

FIG. 1 is a diagram of performance of a receive end before spectrum spreading;
FIG. 2 is a diagram of performance of a receive end after spectrum spreading;
FIG. 3 is a diagram of reducing a transmit end power based on a theoretical constraint;
FIG. 4 is a simplified diagram of a wireless communication system according to an embodiment of this application;

FIG. 5 is a diagram of a structure of a radio resource management apparatus according to an embodiment of this application;

FIG. 6 is a schematic flowchart of a radio resource management method according to an embodiment of this application;

FIG. 7 is a diagram of an example of a narrowband system and a wideband system according to an embodiment of this application;

FIG. 8 is a diagram of determining a transmit power according to an embodiment of this application; and

FIG. 9 is a diagram of an example of a relationship between a spatial isolation degree and a transmit power according to an embodiment of this application.

## DESCRIPTION OF EMBODIMENTS

The following describes embodiments of this application with reference to the accompanying drawings in embodiments of this application.

At least one (item) in the following in this application indicates one (item) or more (items). "A plurality of (items)" means two (items) or more than two (items). "And/or" describes an association relationship between associated objects and indicates that there are three relationships. For example, A and/or B may represent the following three cases: Only A exists, both A and B exist, and only B exists. A character "/" generally represents an "or" relationship between the associated objects. In addition, it should be understood that although terms such as first and second may be used in this application to describe objects, these objects are not limited by these terms. These terms are merely used to distinguish the objects from each other.

Terms "include", "have", and any other variant thereof mentioned in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that in this application, words such as "example" or "for example" are used to represent giving an example, an illustration, or descriptions. Any method or design solution described in this application as "example" or "for example" should not be explained as being more preferred or advantageous over another method or design solution. To be precise, use of the words such as "example" or "for example" is intended to present a relative concept in a specific manner.

A technology provided in this application may be applied to various communication systems. For example, the communication system may be a 4th generation (4th generation, 4G) communication system, for example, a long term evolution (long term evolution, LTE) system, a 5th generation (5th generation, 5G) communication system, a worldwide interoperability for microwave access (worldwide interoperability for microwave access, WiMAX) or wireless local area network (wireless local area network, WLAN) system, a converged system of a plurality of systems, or a future communication system, for example, a 6G communication system. The 5G communication system may also be referred to as a new radio (new radio, NR) system.

A network element in the communication system may send a signal to another network element or receive a signal from the another network element. The signal may include information, signaling, data, or the like. The network element may alternatively be replaced with an entity, a network entity, a device, a communication device, a communication module, a node, a communication node, or the like. In this application, the network element is used as an example for description. For example, the communication system may include at least one terminal and at least one access network device. The access network device may send a downlink signal to the terminal, and/or the terminal may send an uplink signal to the access network device. In addition, it may be understood that if the communication system includes a plurality of terminals, the plurality of terminals may also send signals to each other. In other words, both a signal sending network element and a signal receiving network element may be terminals.

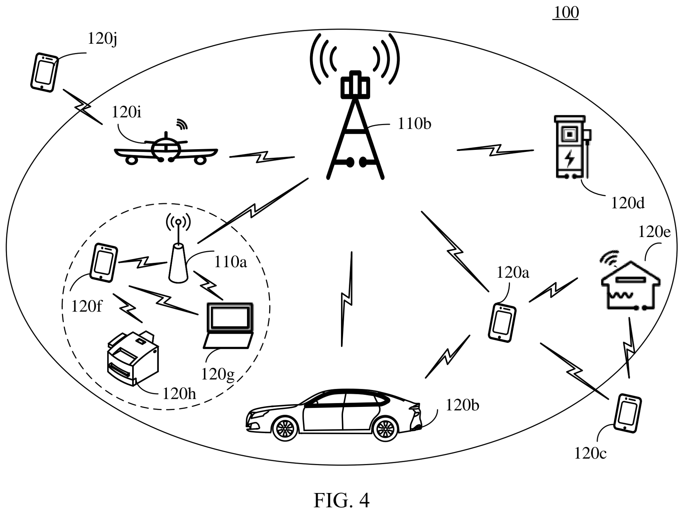

A communication method provided in embodiments of this application may be applied to a wireless communication system like 5G, 6G, or satellite communication. FIG. 4 is a simplified diagram of a wireless communication system according to an embodiment of this application. As shown in FIG. 4, the wireless communication system includes a radio access network 100. The radio access network 100 may be a next generation (for example, 6G or a higher version) radio access network, or a conventional (for example, 5G or 4G) radio access network. One or more communication devices (120a to 120j, which are collectively referred to as 120) may be interconnected or connected to one or more network devices (110a and 110b, which are collectively referred to as 110) in the radio access network 100. FIG. 4 is merely a diagram. The wireless communication system may further include another device, for example, a core network device, a wireless relay device, and/or a wireless backhaul device, which are not shown in FIG. 4.

For example, during actual application, the wireless communication system may include a plurality of network devices (also referred to as access network devices), or may include a plurality of communication devices. One network device may simultaneously serve one or more communication devices. One communication device may also simultaneously access one or more network devices. Quantities of communication devices and network devices included in the wireless communication system are not limited in this embodiment of this application.

The network device may be an entity that is configured to transmit or receive a signal on a network side. The network device may be an access device via which the communication device accesses the wireless communication system in a wireless manner. For example, the network device may be a base station. The base station may cover the following various names in a broad sense, or may be replaced with the following names, for example, a NodeB (NodeB), an evolved NodeB (evolved NodeB, eNB), a next generation NodeB (next generation NodeB, gNB), an access network device in an open radio access network (open radio access network, O-RAN), a relay station, an access point, a transmitting and receiving point (transmitting and receiving point, TRP), a transmitting point (transmitting point, TP), a master eNodeB MeNB, a secondary eNodeB SeNB, a multi-standard radio node, a home NodeB, a network controller, an access node, a radio node, an access point (access point, AP), a transmission node, a transceiver node, and a transceiver node, a baseband unit (baseband unit, BBU), a remote radio unit (remote radio unit, RRU), an active antenna unit (active antenna unit, AAU), a remote radio head (remote radio head, RRH), a central unit (centralized unit, CU), a distributed unit (distributed unit, DU), a radio unit (radio unit, RU), a central unit control plane (CU control plane, CU-CP) node, a central unit user plane (CU user plane, CU-UP) node, a positioning node, and the like. The base station may be a macro base station, a micro base station, a relay node, a donor node, or the like, or a combination thereof. Alternatively, the network device may be a communication module, a modem, or a chip disposed in the foregoing device or apparatus. Alternatively, the network device may be a mobile switching center, a device that takes on a base station function in device-to-device (device-to-device, D2D), vehicle-to-everything (vehicle-to-everything, V2X), and machine-to-machine (machine-to-machine, M2M) communication, a network side device in a 6G network, a device that takes on a base station function in a future communication system, or the like. The network device may support networks using a same access technology or different access technologies. A specific technology and a specific device form that are used by the network device are not limited in this embodiment of this application.

All or a part of functions of the network device in this application may alternatively be implemented by using a software function running on hardware, or may be implemented by using a virtualization function instantiated on a platform (for example, a cloud platform). Alternatively, the network device in this application may be a logical node, a logical module, or software that can implement all or a part of functions of the network device.

The network device may be fixed or mobile. For example, the base stations 110a and 110b are stationary and are responsible for wireless transmission and reception in one or more cells from the communication device 120. A helicopter or uncrewed aerial vehicle 120i shown in FIG. 4 may be configured to serve as a mobile base station, and one or more cells may move based on a location of the mobile base station 120i. In another example, the helicopter or uncrewed aerial vehicle (120i) may be configured to serve as a communication device communicating with the base station 110b.

In this application, a communication apparatus configured to implement the foregoing functions of access network may be an access network device, a network device having a part of functions of the access network, or an apparatus that can support implementation of the functions of the access network, for example, a chip system, a hardware circuit, a software module, or a combination of a hardware circuit and a software module. The apparatus may be installed in the access network device or used together with the access network device. In a method in this application, an example in which the communication apparatus configured to implement the functions of the access network device is the access network device is used for description.

The communication device may be an entity, for example, a mobile phone, configured to receive or transmit a signal on a user side. The communication device may be configured to connect a person, an object, and a machine. The communication device may communicate with one or more core networks via the network device. The communication device includes a handheld device having a wireless connection function, another processing device connected to a wireless modem, a vehicle-mounted device, or the like. The communication device may be a portable, pocket-sized, handheld, computer built-in, or vehicle-mounted mobile apparatus. The communication device 120 may be widely used in various scenarios, for example, cellular communication, device-to-device, vehicle-to-everything (vehicle-to-everything, V2X), point-to-point (point-to-point, P2P), machine-to-machine (machine-to-machine, M2M), machine type communication (machine type communication, MTC), internet of things (internet of things, IoT), virtual reality (virtual reality, VR), augmented reality (augmented reality, AR), industrial control, self-driving, telemedicine, a smart grid, smart furniture, smart office, a smart wearable, smart transportation, a smart city, an uncrewed aerial vehicle, a robot, remote sensing, passive sensing, positioning, navigation and tracking, and autonomous delivery and mobility. Some examples of the communication device 120 are: a user equipment (user equipment, UE) of the 3rd Generation Partnership Project (the 3rd generation partnership project, 3GPP) standard, a fixed device, a mobile device, a handheld device, a wearable device, a cellular phone, a smartphone, a session initiation protocol (SIP) phone, a notebook computer, a personal computer, a smart book, a vehicle, a satellite, a global positioning system (GPS) device, a target tracking device, an uncrewed aerial vehicle, a helicopter, an aircraft, a ship, a remote control device, a smart home device, an industrial device, a personal communication service (personal communication service, PCS) phone, a wireless local loop (wireless local loop, WLL) station, a personal digital assistant (personal digital assistant, PDA), a wireless network camera, a tablet computer, a palmtop computer, a mobile internet device (mobile internet device, MID), a wearable device like a smartwatch, a virtual reality (virtual reality, VR) device, an augmented reality (augmented reality, AR) device, a wireless terminal in industrial control (industrial control), a terminal in an internet of vehicles system, a wireless terminal in self-driving (self-driving), a wireless terminal in a smart grid (smart grid), a wireless terminal in transportation safety (transportation safety), a wireless terminal in a smart city (smart city) like a smart fueler, a terminal on a high-speed railway, and a wireless terminal like a smart speaker, a smart coffee machine, and a smart printer in a smart home (smart home). The communication device 120 may be a wireless device in the foregoing various scenarios or an apparatus disposed in a wireless device, for example, a communication module, a modem, or a chip in the foregoing device. The communication device may also be referred to as a terminal, a terminal device, a user equipment (user equipment, UE), a mobile station (mobile station, MS), a mobile terminal (mobile terminal, MT), or the like. The communication device may alternatively be a communication device in a future wireless communication system. The communication device may be used in a dedicated network device or a general-purpose device. A specific technology and a specific device form used by the communication device are not limited in this embodiment of this application.

For example, the communication device may be configured to serve as a base station. For example, the UE may serve as a scheduling entity that provides a sidelink signal between UEs in V2X, D2D, P2P, or the like. As shown in FIG. 4, a cellular phone 120a and a car 120b communicate with each other by using a sidelink signal. The cellular phone 120a communicates with a smart home device 120e without relaying a communication signal via the base station 110b.

In this application, a communication apparatus configured to implement functions of a communication device may be a terminal, a terminal having a part of functions of the communication device, or an apparatus that can support implementation of the functions of the communication device, for example, a chip system. The apparatus may be installed in the terminal or used together with the terminal. In this application, the chip system may include a chip, or may include the chip and another discrete component. In the technical solutions provided in this application, an example in which the communication apparatus is the terminal or the UE is used for description.

For example, a wireless communication system usually includes a cell, a base station provides cell management, and the base station provides a communication service for a plurality of mobile stations (mobile station, MS) in the cell. The base station includes a baseband unit (baseband unit, BBU) and a remote radio unit (remote radio unit, RRU). The BBU and the RRU may be deployed in different places. For example, the RRU is remotely deployed in a heavy-traffic region, and the BBU is deployed in a central equipment room. Alternatively, the BBU and the RRU may be deployed in a same equipment room. Alternatively, the BBU and the RRU may be different components at a same rack. For example, one cell may correspond to one carrier or component carrier.

Protocol layer structure between an access network device and a terminal

Communication between the access network device and the terminal complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a medium access control (medium access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

For example, the protocol layer structure between the access network device and the terminal may further include an artificial intelligence (artificial intelligence, AI) layer, used to perform transmission of data related to an AI function.

Data transmission between the access network device and the terminal is used as an example. The data transmission needs to pass through the user plane protocol layer, for example, the SDAP layer, the PDCP layer, the RLC layer, the MAC layer, and the physical layer. The SDAP layer, the PDCP layer, the RLC layer, the MAC layer, and the physical layer may also be collectively referred to as an access stratum. Because a data transmission direction includes sending or receiving, each layer is further divided into a sending part and a receiving part. Downlink data transmission is used as an example. After obtaining data from an upper layer, the data is transmitted by the PDCP layer to the RLC layer and the MAC layer. A transport block is generated at the MAC layer, and then wireless transmission is performed through the physical layer. Data is correspondingly encapsulated at each layer. For example, data received by a layer from an upper layer of the layer is considered as a service data unit (service data unit, SDU) of the layer, encapsulated by the layer into a protocol data unit (protocol data unit, PDU), and then transferred to a next layer.

For example, the terminal may further have an application layer and a non-access stratum. The application layer may be used to provide a service for an application installed in the terminal. For example, downlink data received by the terminal may be sequentially transmitted from the physical layer to the application layer, and then is provided by the application layer for the application. For another example, the application layer may obtain data generated by the application, sequentially transmit the data to the physical layer, and send the data to another communication apparatus.

The non-access stratum may be used to forward user data. For example, the non-access stratum forwards uplink data received from the application layer to the SDAP layer, or forwards downlink data received from the SDAP layer to the application layer.

Structure of an access network device

The access network device may include a central unit (central unit, CU) and a distributed unit (distributed unit, DU). A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. The CU and the DU may be divided based on a protocol layer of a wireless network. For example, functions of a PDCP layer and a protocol layer above the PDCP layer are set on the CU, and functions of a protocol layer (for example, an RLC layer and a MAC layer) below the PDCP layer are set on the DU. For another example, functions of a protocol layer above a PDCP layer are set on the CU, and functions of the PDCP layer and a protocol layer below the PDCP layer are set on the DU.

It may be understood that division of processing functions of the CU and the DU based on the protocol layers is merely an example, and there may be another division manner. For example, the CU or the DU may have functions of more protocol layers through division. For another example, the CU or the DU may further have a part of processing functions of protocol layers through division. In a design, a part of functions of the RLC layer and a function of a protocol layer above the RLC layer are set on the CU, and a remaining function of the RLC layer and a function of a protocol layer below the RLC layer are set on the DU. In another design, division of functions of the CU or the DU may alternatively be performed based on a service type or another system requirement. For example, division may be performed based on latencies. A function whose processing time needs to satisfy a latency requirement is set on the DU, and a function whose processing time does not need to satisfy the latency requirement is set on the CU. In another design, the CU may alternatively have one or more functions of the core network. For example, the CU may be disposed on the network side to facilitate centralized management. In another design, an RU of the DU is disposed remotely. The RU has a radio frequency function.

For example, the DU and the RU may be divided at a physical layer (physical layer, PHY). For example, the DU may implement a higher-layer function of the PHY layer, and the RU may implement a lower-layer function of the PHY layer. When used for sending, a function of the PHY layer may include cyclic redundancy check (cyclic redundancy check, CRC) code, channel encoding, rate matching, scrambling, modulation, layer mapping, precoding, resource mapping, physical antenna mapping, and/or a radio frequency sending function. When used for receiving, a function of the PHY layer may include CRC, channel decoding, de-rate matching, descrambling, demodulation, de-layer mapping, channel detection, resource de-mapping, physical antenna de-mapping, and/or a radio frequency receiving function. The higher-layer function of the PHY layer may include some functions of the PHY layer. For example, these functions are closer to the MAC layer. The lower-layer function of the PHY layer may include other functions of the PHY layer. For example, these functions are closer to the radio frequency function. For example, the higher-layer function of the PHY layer may include CRC code addition, channel encoding, rate matching, scrambling, modulation, and layer mapping, and the lower-layer function of the PHY layer may include precoding, resource mapping, physical antenna mapping, and a radio frequency sending function. Alternatively, the higher-layer function of the PHY layer may include CRC code addition, channel encoding, rate matching, scrambling, modulation, layer mapping, and precoding, and the lower-layer function of the PHY layer may include resource mapping, physical antenna mapping, and a radio frequency sending function.

For example, a function of the CU may be implemented by one entity, or may be implemented by different entities. For example, the function of the CU may be further divided. To be specific, the control plane and the user plane are separated and implemented by different entities, which are a control plane CU entity (namely, a CU-CP entity) and a user plane CU entity (namely, a CU-UP entity). The CU-CP entity and the CU-UP entity may be coupled to the DU, to jointly complete a function of the access network device.

In the foregoing architecture, signaling generated by the CU may be sent to a terminal via the DU, or signaling generated by a terminal may be sent to the CU via the DU. For example, signaling at the RRC layer or the PDCP layer is finally processed into signaling at the physical layer and sent to the terminal, or is converted from signaling received from the physical layer. In this architecture, the signaling at the RRC layer or the PDCP layer may be considered as being sent via the DU or being sent via the DU and the RU.

For example, any one of the DU, the CU, the CU-CP, the CU-UP, and the RU may be a software module, a hardware structure, or a combination of the software module and the hardware structure. This is not limited. Different entities may exist in different forms. This is not limited. For example, the DU, the CU, the CU-CP, and the CU-UP are software modules, and the RU is a hardware structure. The modules and methods performed by the modules also fall within the protection scope of this application.

In different systems, the CU (or the CU-CP and the CU-UP), the DU, or the RU may also have different names, but a person skilled in the art may understand meanings thereof. For example, in an O-RAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU.

It should be understood that a quantity and a type of each device in the communication system shown in FIG. 4 are merely used as an example, and this application is not limited thereto. During actual application, the communication system may further include more terminals and more access network devices, and may further include another network element, for example, a core network device and/or a network element configured to implement an artificial intelligence function.

It may be understood that all or a part of functions implemented by one or more of the terminal, the access network device, the core network device, or the network element configured to implement the artificial intelligence function may be virtualized, to be specific, implemented by using one or more of a dedicated processor or a general purpose processor and a corresponding software module. Because the terminal and the access network device are related to an interface for air interface transmission, receiving and sending functions of the interface may be implemented by hardware. All core network devices, such as an operation administration and maintenance (operation administration and maintenance, OAM) network element, may be virtualized. For example, one or more functions of a virtualized terminal, access network device, core network device, or network element configured to implement the artificial intelligence function may be implemented by a cloud device, for example, a cloud device in an over the top (over the top, OTT) system.

The method provided in this application may be used for communication between the access network device and the terminal, and may also be used for communication between other communication devices, for example, communication between a macro base station and a micro base station that are in a wireless backhaul link, or communication between two terminals in a sidelink (sidelink, SL). This is not limited.

In this application, "sending information to... (for example, a terminal)" or a related diagram in the accompanying drawings may be understood as that a destination end of the information is a terminal, and may include directly or indirectly sending information to the terminal. "Receiving information from... (for example, a terminal)" or "receive information from... (for example, a terminal)" or a related diagram in the accompanying drawings may be understood as that a source end of the information is a terminal, and may include directly or indirectly receiving information from the terminal. Necessary processing, such as a format change, may be performed on information between the source end and the destination end that are for sending the information. However, the destination end can understand valid information from the source end. A similar expression in this application may be understood similarly, and details are not described herein.

For the problem proposed in the background, this application provides a radio resource management solution. A spatial isolation degree between a transmit end and a receive end is obtained based on received power detection, and transmit powers corresponding to a plurality of resource units are obtained based on the spatial isolation degree, such that a sum of powers received by the receive end on all resource units is less than or equal to a blocking threshold. Therefore, a power at the transmit end can be dynamically adjusted, thereby eliminating blocking interference at the receive end, and maximizing a gain of spectrum spreading.

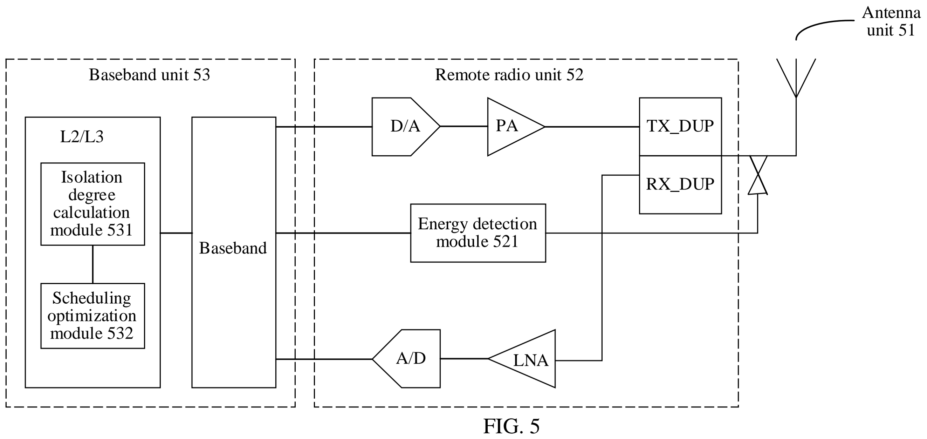

FIG. 5 is a diagram of a structure of a radio resource management apparatus according to an embodiment of this application. The radio resource management apparatus in this embodiment of this application may implement the radio resource management method in this embodiment of this application by using software, hardware, or hardware executing corresponding software.

In an example, the radio resource management apparatus in this embodiment of this application may implement the radio resource management method in this embodiment of this application by using hardware or hardware executing corresponding software. As shown in FIG. 5, the apparatus includes an antenna unit 51, a remote radio unit (remote radio unit, RRU) 52, and a baseband unit (baseband unit, BBU) 53 connected in sequence. The RRU 52 may include a power amplifier (power amplifier, PA), a digital-to-analog converter (digital-to-analog converter, D/A), an analog-to-digital converter (analog-to-digital converter, A/D), a low noise amplifier (low noise amplifier, LNA), a transmission-duplexer (transmission-duplexer, TX-DUP), a receiving-duplexer (receiving-duplexer, RX-DUP), and the like. The BBU 53 includes a layer 2 (layer 2, L2)/layer 3 (layer 3, L3), a baseband, and the like.

The remote radio unit 52 is configured to perform, by using a first bandwidth unit, received power detection in a downlink frequency range corresponding to a receive end, to obtain a received power corresponding to each of at least one first bandwidth unit, where the downlink frequency range includes the at least one first bandwidth unit; the baseband unit 53 is configured to obtain a spatial isolation degree between a transmit end and the receive end based on a system transmit power at the receive end and the received power corresponding to each of the at least one first bandwidth unit; and the baseband unit 53 is further configured to obtain, based on the spatial isolation degree and a power suppression degree that corresponds to at least one resource unit, a transmit power corresponding to the at least one resource unit, such that a sum of powers received by the receive end on all resource units is less than or equal to a blocking threshold.

In a possible implementation, a power received by the receive end on a resource unit is a difference between a transmit power corresponding to the resource unit, and the spatial isolation degree plus a power suppression degree corresponding to the resource unit.

In another possible implementation, the baseband unit 53 is further configured to determine an operating mode of the receive end, where the operating mode of the receive end includes any one of the following: a wideband signal mode and a narrowband signal mode, and the system transmit power at the receive end is associated with the operating mode of the receive end.

In still another possible implementation, when the operating mode of the receive end is the narrowband signal mode, a difference between the received power corresponding to the first bandwidth unit and a received power corresponding to an adjacent bandwidth unit of the first bandwidth unit is greater than or equal to a first threshold; or when the operating mode of the receive end is the wideband signal mode, a difference between received powers corresponding to a plurality of consecutive first bandwidth units is less than or equal to a second threshold, and a difference between the received powers corresponding to the plurality of consecutive bandwidth units, and a received power corresponding to an adjacent bandwidth unit of the plurality of consecutive bandwidth units is greater than or equal to the first threshold.

In still another possible implementation, the first bandwidth unit is less than or equal to 400 kHz.

In still another possible implementation, the antenna unit 51 is configured to send a signal based on the transmit power corresponding to the at least one resource unit.

In another example, the radio resource management apparatus in this embodiment of this application may implement the radio resource management method in this embodiment of this application by using software or hardware executing corresponding software. As shown in FIG. 5, the apparatus includes an energy detection module 521, an isolation degree calculation module 531, and a scheduling optimization module 532. The energy detection module 521 in this example may be located in the RRU 52. For example, the energy detection module 521 may include a filter and an amplifier. One end of the energy detection module 521 is connected between the antenna unit 51 and the TX-DUP/RX-DUP, to induce a detection path. The isolation degree calculation module 531 may be deployed at the L2 of the BBU 53, or may be deployed at the L3 of the BBU 53. The scheduling optimization module 532 may be deployed at the L2 of the BBU 53.

The energy detection module 521 is configured to perform, by using a first bandwidth unit, received power detection in a downlink frequency range corresponding to a receive end, to obtain a received power corresponding to each of at least one first bandwidth unit, where the downlink frequency range includes the at least one first bandwidth unit; the isolation degree calculation module 531 is configured to obtain a spatial isolation degree between a transmit end and the receive end based on a system transmit power at the receive end and the received power corresponding to each of the at least one first bandwidth unit; and the scheduling optimization module is configured to obtain, based on the spatial isolation degree and a power suppression degree that corresponds to at least one resource unit, a transmit power corresponding to the at least one resource unit, such that a sum of powers received by the receive end on all resource units is less than or equal to a blocking threshold.

For example, the energy detection module 521 may transport a detection result (in other words, the received power corresponding to each of the at least one first bandwidth unit) to the BBU 53 by using a BBRF protocol.

In a possible implementation, a power received by the receive end on a resource unit is a difference between a transmit power corresponding to the resource unit, and the spatial isolation degree plus a power suppression degree corresponding to the resource unit.

In another possible implementation, the apparatus further includes: an operating mode determining module, configured to determine an operating mode of the receive end, where the operating mode of the receive end includes any one of the following: a wideband signal mode and a narrowband signal mode, and the system transmit power at the receive end is associated with the operating mode of the receive end.

In still another possible implementation, when the operating mode of the receive end is the narrowband signal mode, a difference between the received power corresponding to the first bandwidth unit and a received power corresponding to an adjacent bandwidth unit of the first bandwidth unit is greater than or equal to a first threshold; or when the operating mode of the receive end is the wideband signal mode, a difference between received powers corresponding to a plurality of consecutive first bandwidth units is less than or equal to a second threshold, and a difference between the received powers corresponding to the plurality of consecutive bandwidth units, and a received power corresponding to an adjacent bandwidth unit of the plurality of consecutive bandwidth units is greater than or equal to the first threshold.

In still another possible implementation, the first bandwidth unit is less than or equal to 400 kHz.

In still another possible implementation, the apparatus further includes: a sending module, configured to send a signal based on the transmit power corresponding to the at least one resource unit.

Division of modules in this application is an example, and is merely logical function division, and there may be other division during actual implementation. In addition, in examples of this application, functional modules may be integrated into one processor, each of the modules may exist alone physically, or two or more modules may be integrated into one module. The integrated module may be implemented in a form of hardware, or may be implemented in a form of a software functional module.

For example, the foregoing radio resource apparatus may be an access network device, may be a module (for example, a processor, a chip, or a chip system) used in the access network device, or may be a logical node, a logical module, or software that can implement all or a part of functions of the access network device.

Based on a same concept as the foregoing radio resource apparatus, an embodiment of this application further provides a radio resource management method.

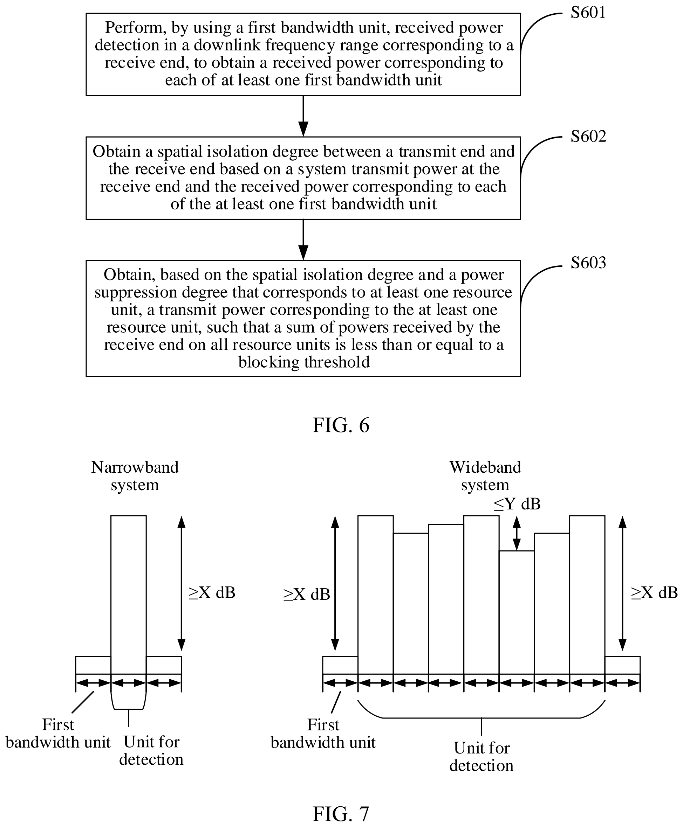

FIG. 6 is a schematic flowchart of a radio resource management method according to an embodiment of this application. It may be understood that in this application, an example in which an access network device is used as an example of an execution body is used for illustration. However, the example execution body is not limited in this application. For example, the access network device in the method provided in this application may be a chip, a chip system, or a processor that are used in the access network device, or may be a logical node, a logical module, or software that can implement all or a part of functions of the access network device. For example, the method may include the following steps.

S601: Perform, by using a first bandwidth unit, received power detection in a downlink frequency range corresponding to a receive end, to obtain a received power corresponding to each of at least one first bandwidth unit.

In this embodiment, a transmit end may be an access network device A, and the receive end may be an access network device B.

In this embodiment, the transmit end performs received power detection on the receive end. Specifically, the received power detection is performed in the downlink frequency range corresponding to the receive end, in other words, the transmit end performs detection on a downlink signal transmitted by the receive end.

For example, the transmit end may periodically perform received power detection; or the transmit end may be triggered by a user operation to perform received power detection.

A detection spectrum range of the detection operation should cover a spectrum of the receive end, but does not need to strictly match the spectrum of the receive end. For example, an uplink frequency range of the receive end is 885 MHz to 889 MHz, and a corresponding downlink frequency range is 930 MHz to 934 MHz. In this case, detection may be performed on energy in the frequency range of 930 MHz to 934 MHz, or detection may be performed on energy in a wider frequency range (for example, 925 MHz to 960 MHz).

For example, when the access network device A performs detection on the energy in the frequency range of 930 MHz to 934 MHz, a passband of a band-pass filter in an energy detection module of the access network device A is 930 MHz to 934 MHz. The access network device A receives a downlink signal of the access network device B, obtains a signal of 930 MHz to 934 MHz through filtering, amplifies the signal, and then detects energy of the signal.

Because the downlink frequency range of the receive end is a wide frequency range, to detect energy more accurately, in this embodiment, the received power detection is performed, by using the first bandwidth unit, in the downlink frequency range corresponding to the receive end, to obtain the received power corresponding to each of the at least one first bandwidth unit. The downlink frequency range includes the at least one first bandwidth unit.

For example, the first bandwidth unit is less than or equal to 400 kHz.

For example, when a detection frequency range is 930 MHz to 934 MHz, energy is detected in a unit of 200 kHz, that is, the first bandwidth unit is 200 kHz. The range of 930 MHz to 934 MHz includes 20 first bandwidth units. In some scenarios, a bandwidth of a cell of the access network device B is approximately 200 kHz, so that the access network device A can detect energy of each cell of the access network device B.

S602: Obtain a spatial isolation degree between the transmit end and the receive end based on a system transmit power at the receive end and the received power corresponding to each of the at least one first bandwidth unit.

The spatial isolation degree may also be referred to as a path loss.

An operating mode of the receive end may include a narrowband signal mode and a wideband signal mode.

FIG. 7 is a diagram of an example of a narrowband system and a wideband system according to an embodiment of this application. A horizontal coordinate of a rectangle in the figure represents a first bandwidth unit, and a vertical coordinate represents a detected received power.

When the operating mode of the receive end is the narrowband signal mode, the receive end is the narrowband system, for example, a global system for mobile communications-railway (global system for mobile communications-railway, GSM-R) or a narrowband internet of things (narrowband internet of things, NBIoT). A difference between a received power corresponding to the first bandwidth unit and a received power corresponding to an adjacent bandwidth unit of the first bandwidth unit is greater than or equal to a first threshold. For example, in FIG. 7, the difference between the received power corresponding to the first bandwidth unit and the received power corresponding to the adjacent bandwidth unit of the first bandwidth unit is greater than or equal to X dB. A length of the adjacent bandwidth unit of the first bandwidth unit is equal to a length of the first bandwidth unit.

Still refer to FIG. 7. When the operating mode of the receive end is the wideband signal mode, the receive end is the wideband system, for example, an LTE or NR system. A difference between received powers corresponding to a plurality of consecutive first bandwidth units is less than or equal to a second threshold, and a difference between the received powers corresponding to the plurality of consecutive bandwidth units, and a received power corresponding to an adjacent bandwidth unit of the plurality of consecutive bandwidth units is greater than or equal to the first threshold. For example, in FIG. 7, the difference between the received powers corresponding to the plurality of consecutive first bandwidth units is less than or equal to Y dB, and the difference between the received powers corresponding to the plurality of consecutive bandwidth units, and the received power corresponding to the adjacent bandwidth unit of the plurality of consecutive bandwidth units is greater than or equal to X dB. A unit for detection performed by the transmit end on the receive end is the foregoing plurality of consecutive first bandwidth units.

In this embodiment, the system transmit power at the receive end is associated with the operating mode of the receive end. Therefore, before step S602, the method may further include the following step: Determine the operating mode of the receive end. To be specific, it is determined whether the receive end works in the narrowband signal mode or the wideband signal mode. A system transmit power of the narrowband system is significantly higher than a system transmit power of the wideband system.

The transmit end should have a capability of buffering a detection result, because when the receive end works in the wideband signal mode, the transmit end sequentially detects the received power corresponding to each of the at least one first bandwidth unit.

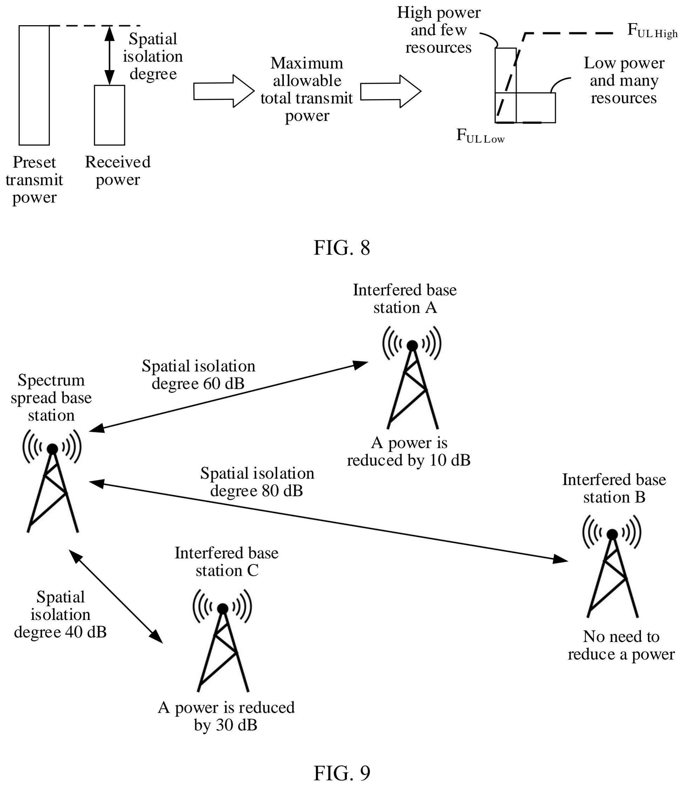

After the received power corresponding to each of the at least one first bandwidth unit is detected, the transmit end may obtain the spatial isolation degree (in dB) between the transmit end and the receive end based on the system transmit power at the receive end and the received power corresponding to each of the at least one first bandwidth unit. For example, FIG. 8 is a diagram of determining a transmit power according to an embodiment of this application. When an operating mode of a receive end is a narrowband signal mode, a spatial isolation degree between a transmit end and the receive end is equal to a system transmit power at the receive end minus a received power corresponding to a first bandwidth unit. When the operating mode of the receive end is a wideband signal mode, the spatial isolation degree between the transmit end and the receive end is equal to the system transmit power at the receive end minus an average power on a unit for detection. The unit for detection performed by the transmit end on the receive end is the foregoing plurality of consecutive first bandwidth units, and the average power on the unit for detection is an average value of the foregoing received powers of the plurality of consecutive first bandwidth units.

The system transmit power at the receive end varies with different operating modes of the receive end. For example, when the operating mode of the receive end is the narrowband signal mode, the system transmit power of the narrowband system is 43 dBm/200 kHz, and the system transmit power of the wideband system is 26 dBm/200 kHz. The transmit end may pre-store the system transmit power.

S603: Obtain, based on the spatial isolation degree and a power suppression degree that corresponds to at least one resource unit, a transmit power corresponding to the at least one resource unit, such that a sum of powers received by the receive end on all resource units is less than or equal to a blocking threshold.

After obtaining the spatial isolation degree, the transmit end calculates, based on the spatial isolation degree and performance of a receive antenna, total powers at the receive end under different powers and different resource allocation, and finds a transmit power and a resource allocation solution that are optimal when a total power at the receive end does not exceed the blocking threshold.

Specifically, a downlink frequency range of the transmit end may be first divided into at least one resource unit, for example, divided into a plurality of resource block groups (resource block groups, RBGs). One RBG may include at least one resource block (resource block, RB). Then, the transmit power corresponding to the at least one resource unit may be obtained based on the spatial isolation degree and the power suppression degree that corresponds to the at least one resource unit, such that the sum of the powers received by the receive end on all the resource units is less than or equal to the blocking threshold *Thld,* that is, making $\int_{F_{Ul\_Low}}^{F_{Ul\_High}} Power(f) \times Suppression(f) df \leq Thld$ true, where f is a frequency, and f is measured in RBs or RBGs; *Power*(f) is an actual received power at the receive end, is a difference between an actual transmit power at the transmit end and the spatial isolation degree, and is related to f; $F_{Ul\_Low}$ is a lowest frequency; $F_{Ul\_High}$ is a highest frequency; *Suppression*(f) is a power suppression degree corresponding to a resource unit, and may be preset; and *Thld* is a maximum power that does not cause blocking at the receive end, that is, the blocking threshold.

Refer to FIG. 8. A relationship between resource allocation and a transmit power is as follows: When a quantity of resource units obtained through division is small, a transmit power corresponding to each resource unit is high; or when a quantity of resource units obtained through division is large, a transmit power corresponding to each resource unit is low.

As shown in Table 1, the following describes, by using an example, how to determine the transmit power corresponding to each resource unit.

Table 1

| Scheduling granularity | | | Optimization parameter | Optimization objective | Isolation degree detection result | Module performance | Optimization constraint |
|---|---|---|---|---|---|---|---|
| RBG | Start frequency | End frequency | Transmit power spectrum | Spectral efficiency | Path loss | Suppression degree | Received power |
| 1 | 880.4 | 881.12 | 39 | 11.2 | 70 | 40 | -71 |
| 2 | 881.12 | 881.84 | 39 | 11.2 | | 35 | -66 |
| 3 | 881.84 | 882.56 | 39 | 11.2 | | 28 | -59 |
| 4 | 882.56 | 883.28 | 39 | 11.2 | | 20 | -51 |
| 5 | 883.28 | 884 | 0 | 0 | | 10 | -80 |
| Total | | | | 44.8 | | | -50.2 |

In Table 1, a downlink frequency range of a transmit end is divided into five RBGs. In this case, a transmit power is determined by five RBG positions in total. The optimization objective is to maximize total spectral efficiency of the five RBGs. The optimization constraint is that a received power that is at a receive end and that is caused by the five RBGs is less than or equal to a blocking threshold.

The spectral efficiency is determined by the transmit power spectrum, and the received power at the receive end is equal to the transmit power minus an isolation degree and a module suppression degree.

If the isolation degree detection result is 60 dB (in other words, a spatial isolation degree between the transmit end and the receive end is 60 dB), for five candidate RBG positions, suppression degrees of transmit powers at the transmit end are respectively 40 dB, 35 dB, 28 dB, 20 dB, and 10 dB, and the suppression degree may be preset. In this case, for any configuration of the transmit power in the five RBGs, a total received power can be calculated (where the total received power is a sum of powers received by the receive end in the five RBGs). A power received by the receive end in any RBG is a difference between a transmit power corresponding to the RBG, and the spatial isolation degree plus a power suppression degree corresponding to the RBG. For example, for an RBG1, a received power=39-70-40=71; and for an RBG2, a received power=39-70-35=66. It is assumed that the total received power is required to be less than the blocking threshold (for example, -50 dBm), and the total spectral efficiency of the five RBGs is expected to be the maximum. An optimal solution that can be found is that data is scheduled in an RBG1 to an RBG4, the transmit power is 39 dBm, and no data is scheduled in an RBG5. In this case, the total spectral efficiency is the maximum (which is 44.8 bit/s/Hz), and blocking is not caused at the receive end.

Based on the foregoing optimal allocation solution, the transmit end controls a downlink transmit power spectrum and a range of an RB for downlink scheduling that are of a user in a cell of the transmit end.

After the solution of this embodiment is implemented, a spatial isolation degree between a spectrum spread base station (for example, the foregoing access network device A) and an interfered base station (for example, the foregoing access network device B) may be dynamically detected, and a resource allocation policy and a power allocation policy that are of the spectrum spread base station in a spread area may be dynamically adjusted based on the spatial isolation degree, so that an available power and available resources in the spread area can be maximized without generating uplink blocking interference on the interfered base station, and a value of spectrum spreading can be improved.

FIG. 9 is a diagram of an example of a relationship between a spatial isolation degree and a transmit power according to an embodiment of this application. When a spatial isolation degree between a spectrum spread base station and an interfered base station A is 60 dB, the spectrum spread base station needs to reduce a transmit power by 10 dB. When a spatial isolation degree between the spectrum spread base station and an interfered base station B is 80 dB, the spectrum spread base station does not need to reduce the transmit power. When a spatial isolation degree between the spectrum spread base station and an interfered base station C is 40 dB, the spectrum spread base station needs to reduce the transmit power by 30 dB.

According to the radio resource management method provided in this embodiment of this application, the spatial isolation degree between the transmit end and the receive end is obtained based on the received power detection, and transmit powers corresponding to a plurality of resource units are obtained based on the spatial isolation degree, such that the sum of the powers received by the receive end on all the resource units is less than or equal to the blocking threshold. Therefore, a power at the transmit end can be dynamically adjusted, thereby eliminating blocking interference at the receive end, and maximizing a gain of spectrum spreading.

All or a part of the technical solutions provided in this application may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedure or functions according to this application are completely or partially generated. The computer may be a general-purpose computer, a dedicated computer, a computer network, a terminal device, an access network device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The readable medium may be a magnetic medium (for example, a floppy disk, a hard disk drive, or a magnetic tape), an optical medium (for example, a digital video disc (digital video disc, DVD)), a semiconductor medium, or the like.

In this application, without a logical contradiction, mutual reference can be made between examples. For example, mutual reference can be made between methods and/or terms in method embodiments, mutual reference can be made between functions and/or terms in apparatus embodiments, and mutual reference can be made between functions and/or terms in apparatus examples and method examples.

It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A radio resource management method, wherein the method comprises:

    performing, by using a first bandwidth unit, received power detection in a downlink frequency range corresponding to a receive end, to obtain a received power corresponding to each of at least one first bandwidth unit, wherein the downlink frequency range comprises the at least one first bandwidth unit;
    obtaining a spatial isolation degree between a transmit end and the receive end based on a system transmit power at the receive end and the received power corresponding to each of the at least one first bandwidth unit; and
    obtaining, based on the spatial isolation degree and a power suppression degree that corresponds to at least one resource unit, a transmit power corresponding to the at least one resource unit, such that a sum of powers received by the receive end on all resource units is less than or equal to a blocking threshold.

2. The method according to claim 1, wherein a power received by the receive end on a resource unit is a difference between a transmit power corresponding to the resource unit, and the spatial isolation degree plus a power suppression degree corresponding to the resource unit.

3. The method according to claim 1 or 2, wherein the method further comprises:

    determining an operating mode of the receive end, wherein the operating mode of the receive end comprises any one of the following: a wideband signal mode and a narrowband signal mode; and
    the system transmit power at the receive end is associated with the operating mode of the receive end.

4. The method according to claim 3, wherein when the operating mode of the receive end is the narrowband signal mode, a difference between the received power corresponding to the first bandwidth unit and a received power corresponding to an adjacent bandwidth unit of the first bandwidth unit is greater than or equal to a first threshold; or when the operating mode of the receive end is the wideband signal mode, a difference between received powers corresponding to a plurality of consecutive first bandwidth units is less than or equal to a second threshold, and a difference between the received powers corresponding to the plurality of consecutive bandwidth units, and a received power corresponding to an adjacent bandwidth unit of the plurality of consecutive bandwidth units is greater than or equal to the first threshold.

5. The method according to any one of claims 1 to 4, wherein the first bandwidth unit is less than or equal to 400 kHz.

6. The method according to any one of claims 1 to 5, wherein the method further comprises:
sending a signal based on the transmit power corresponding to the at least one resource unit.

7. A radio resource management apparatus, wherein the apparatus comprises an energy detection module, an isolation degree calculation module, and a scheduling optimization module, wherein

the energy detection module is configured to perform, by using a first bandwidth unit, received power detection in a downlink frequency range corresponding to a receive end, to obtain a received power corresponding to each of at least one first bandwidth unit, wherein the downlink frequency range comprises the at least one first bandwidth unit;
the isolation degree calculation module is configured to obtain a spatial isolation degree between a transmit end and the receive end based on a system transmit power at the receive end and the received power corresponding to each of the at least one first bandwidth unit; and
the scheduling optimization module is configured to obtain, based on the spatial isolation degree and a power suppression degree that corresponds to at least one resource unit, a transmit power corresponding to the at least one resource unit, such that a sum of powers received by the receive end on all resource units is less than or equal to a blocking threshold.

8. The apparatus according to claim 7, wherein a power received by the receive end on a resource unit is a difference between a transmit power corresponding to the resource unit, and the spatial isolation degree plus a power suppression degree corresponding to the resource unit.

9. The apparatus according to claim 7 or 8, wherein the apparatus further comprises:

an operating mode determining module, configured to determine an operating mode of the receive end, wherein the operating mode of the receive end comprises any one of the following: a wideband signal mode and a narrowband signal mode; and
the system transmit power at the receive end is associated with the operating mode of the receive end.

10. The apparatus according to claim 9, wherein when the operating mode of the receive end is the narrowband signal mode, a difference between the received power corresponding to the first bandwidth unit and a received power corresponding to an adjacent bandwidth unit of the first bandwidth unit is greater than or equal to a first threshold; or when the operating mode of the receive end is the wideband signal mode, a difference between received powers corresponding to a plurality of consecutive first bandwidth units is less than or equal to a second threshold, and a difference between the received powers corresponding to the plurality of consecutive bandwidth units, and a received power corresponding to an adjacent bandwidth unit of the plurality of consecutive bandwidth units is greater than or equal to the first threshold.

11. The apparatus according to any one of claims 7 to 10, wherein the first bandwidth unit is less than or equal to 400 kHz.

12. The apparatus according to any one of claims 7 to 11, wherein the apparatus further comprises:
a sending module, configured to send a signal based on the transmit power corresponding to the at least one resource unit.

13. A radio resource management apparatus, comprising an antenna unit, a remote radio unit, and a baseband unit connected in sequence, wherein

the remote radio unit is configured to perform, by using a first bandwidth unit, received power detection in a downlink frequency range corresponding to a receive end, to obtain a received power corresponding to each of at least one first bandwidth unit, wherein the downlink frequency range comprises the at least one first bandwidth unit;
the baseband unit is configured to obtain a spatial isolation degree between a transmit end and the receive end based on a system transmit power at the receive end and the received power corresponding to each of the at least one first bandwidth unit; and
the baseband unit is further configured to obtain, based on the spatial isolation degree and a power suppression degree that corresponds to at least one resource unit, a transmit power corresponding to the at least one resource unit, such that a sum of powers received by the receive end on all resource units is less than or equal to a blocking threshold.

**14.** The apparatus according to claim 13, wherein a power received by the receive end on a resource unit is a difference between a transmit power corresponding to the resource unit, and the spatial isolation degree plus a power suppression degree corresponding to the resource unit.

**15.** The apparatus according to claim 13 or 14, wherein the baseband unit is further configured to determine an operating mode of the receive end, wherein the operating mode of the receive end comprises any one of the following: a wideband signal mode and a narrowband signal mode; and
the system transmit power at the receive end is associated with the operating mode of the receive end.

**16.** The apparatus according to claim 15, wherein when the operating mode of the receive end is the narrowband signal mode, a difference between the received power corresponding to the first bandwidth unit and a received power corresponding to an adjacent bandwidth unit of the first bandwidth unit is greater than or equal to a first threshold; or when the operating mode of the receive end is the wideband signal mode, a difference between received powers corresponding to a plurality of consecutive first bandwidth units is less than or equal to a second threshold, and a difference between the received powers corresponding to the plurality of consecutive bandwidth units, and a received power corresponding to an adjacent bandwidth unit of the plurality of consecutive bandwidth units is greater than or equal to the first threshold.

**17.** The apparatus according to any one of claims 13 to 16, wherein the first bandwidth unit is less than or equal to 400 kHz.

**18.** The apparatus according to any one of claims 13 to 17, wherein the antenna unit is configured to send a signal based on the transmit power corresponding to the at least one resource unit.

**19.** A computer-readable storage medium, wherein the storage medium stores a computer program or instructions; and when the computer program or the instructions are executed by a radio resource management apparatus, the method according to any one of claims 1 to 6 is implemented.

**20.** A computer program, wherein when the computer program is run on a computer, the method according to any one of claims 1 to 6 is performed.

**21.** A system, comprising at least two apparatuses, wherein at least one of the at least two apparatuses is configured to perform the method according to any one of claims 1 to 6.

Idle spectrum

Spectrum A

Transmit end

Spectrum B

Receive end

Receive end/spectrum B receiving filter

FIG. 1

Spectrum
spreading

Spectrum A

Transmit end

Spectrum B

Receive end

Receive end/spectrum B receiving filter

FIG. 2

Azimuth of a transmit antenna

Azimuth of a receive antenna

90°

180°                    0°

270°

90°

180°                    0°

270°

Minimum inter-site distance

Spectrum spreading

Spectrum A

Transmit

Spectrum B

Receive

Transmit

Receive end/spectrum B receiving filter

FIG. 3

EP 4 694 389 A1

FIG. 4

FIG. 5

Perform, by using a first bandwidth unit, received power detection in a downlink frequency range corresponding to a receive end, to obtain a received power corresponding to each of at least one first bandwidth unit

S601

Obtain a spatial isolation degree between a transmit end and the receive end based on a system transmit power at the receive end and the received power corresponding to each of the at least one first bandwidth unit

S602

Obtain, based on the spatial isolation degree and a power suppression degree that corresponds to at least one resource unit, a transmit power corresponding to the at least one resource unit, such that a sum of powers received by the receive end on all resource units is less than or equal to a blocking threshold

S603

FIG. 6

Narrowband system

Wideband system

$\leq$Y dB

$\geq$X dB

$\geq$X dB

$\geq$X dB

$\geq$X dB

First bandwidth unit    Unit for detection

First bandwidth unit    Unit for detection

FIG. 7

FIG. 8

FIG. 9

## INTERNATIONAL SEARCH REPORT

| International application No. |
| --- |
| **PCT/CN2024/085097** |

**A.  CLASSIFICATION OF SUBJECT MATTER**

H04W52/18(2009.01)i

According to International Patent Classification (IPC) or to both national classification and IPC

**B.  FIELDS SEARCHED**

Minimum documentation searched (classification system followed by classification symbols)

IPC:  H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP: 带宽, 发射, 发送, 隔离度, 接收, 功率, 功率抑制, 功率抑制度, 检测, 空间隔离度, 路径损耗, 路损, spatial, suppression, THld, threshold, isolate, antenna, bandwidth, path loss, power

**C.  DOCUMENTS CONSIDERED TO BE RELEVANT**

| Category* | Citation of document, with indication, where appropriate, of the relevant passages | Relevant to claim No. |
| --- | --- | --- |
| A | US 2022070862 A1 (XIDIAN UNIVERSITY) 03 March 2022 (2022-03-03)<br>description, paragraphs [0004]-[0022] | 1-21 |
| A | CN 102918907 A (NEC CORP.) 06 February 2013 (2013-02-06)<br>entire document | 1-21 |
| A | CN 110868751 A (DATANG MOBILE COMMUNICATIONS EQUIPMENT CO., LTD.) 06 March 2020 (2020-03-06)<br>entire document | 1-21 |
| A | CN 110167168 A (HUAWEI TECHNOLOGIES CO., LTD.) 23 August 2019 (2019-08-23)<br>entire document | 1-21 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 May 2024** | **01 June 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/085097**

| Patent document cited in search report | | | Publication date (day/month/year) | Patent family member(s) | | | Publication date (day/month/year) |
|---|---|---|---|---|---|---|---|
| US | 2022070862 | A1 | 03 March 2022 | US | 11917598 | B2 | 27 February 2024 |
| CN | 102918907 | A | 06 February 2013 | US | 2013072246 | A1 | 21 March 2013 |
| | | | | US | 8965435 | B2 | 24 February 2015 |
| | | | | JPWO | 2011148836 | A1 | 25 July 2013 |
| | | | | JP | 5765337 | B2 | 19 August 2015 |
| | | | | WO | 2011148836 | A1 | 01 December 2011 |
| | | | | EP | 2579660 | A1 | 10 April 2013 |
| | | | | EP | 2579660 | A4 | 26 October 2016 |
| | | | | EP | 2579660 | B1 | 10 January 2018 |
| CN | 110868751 | A | 06 March 2020 | WO | 2020043002 | A1 | 05 March 2020 |
| CN | 110167168 | A | 23 August 2019 | WO | 2019158064 | A1 | 22 August 2019 |
| | | | | EP | 3754885 | A1 | 23 December 2020 |
| | | | | EP | 3754885 | A4 | 07 April 2021 |
| | | | | US | 2020374814 | A1 | 26 November 2020 |
| | | | | US | 11234198 | B2 | 25 January 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310458331